# EUROPÄISCHE PATENTANMELDUNG

(11) **EP 2 999 086 A1**
(43) Veröffentlichungstag der Anmeldung: **23.03.2016**
(21) Anmeldenummer: 14185607.0
(22) Anmeldetag: 19.09.2014
(51) Int. Cl.: H02K 1/02, H02K 1/24

(54) **Hochpolig ausgestaltbarer Rotor für eine Reluktanzmaschine**

(71) Anmelder: Siemens Aktiengesellschaft, 80333 München (DE)
(72) Erfinder: Fischer, Ralf, 90419 Nürnberg (DE); Petermaier, Korbinian, 80799 München (DE); Zeichfüßl, Roland, 94099 Ruhstorf a. d. Rott (DE)

(57) **Zusammenfassung**

Die Erfindung betrifft einen Rotor (10) für eine Reluktanzmaschine (E), mit entlang eines Umfangs (12) angeordneten Polbereichen (16) mit einer Übergangsfläche (14) für einen Übergang eines magnetischen Flusses zu einem Luftspalt (L) der Reluktanzmaschine (E) hin, wobei jeweils benachbarte Polbereiche (16) über ein Flussleitelement (18) magnetisch gekoppelt sind. Der Rotor (10) soll hochpolig ausgestaltet werden können, ohne den Leistungsfaktor übermäßig zu beeinträchtigen. Der Rotor (10) weist hierzu eine Welle (D) auf, an der die Flussleitelemente (18) jeweils durch einen Block (28,34) gebildet sind, wobei ein Material (22) des Blockes (28,34) eine magnetische Anisotropie mit einer leichten Achse (24) und einer schweren Achse der Magnetisierbarkeit aufweist und die leichte Achse (24) zumindest bereichsweise tangential zum Umfang (12) oder zumindest in einem Winkel von weniger als 25° bezüglich der Tangente des Umfangs (12) angeordnet ist.

## Beschreibung

Die Erfindung betrifft einen Rotor für eine Reluktanzmaschine, also einen Rotor ohne eigene elektrische oder magnetische Erregung. Der Rotor weist stattdessen entlang eines Umfangs angeordnete Polbereiche auf, die Übergangsflächen aufweisen, durch welche hindurch ein magnetischer Fluss aus einem Luftspalt der Reluktanzmaschine in die Polbereiche eintreten oder aus diesen austreten kann. Benachbarte Polbereiche sind über Flussleitelemente magnetisch gekoppelt. Zu der Erfindung gehören auch eine elektrische Maschine mit dem erfindungsgemäßen Rotor sowie ein Verfahren zum Herstellen des Rotors.

Bisherige Reluktanzläufer bestehen in der Regel aus isotropen weichmagnetischen Werkstoffen mit Aussparungen, die mit Luft gefüllt sein können. Die Aussparungen bilden somit Flusssperren. Diese Flusssperren beeinträchtigen oftmals die mechanische Stabilität des Läufers.

Bei Reluktanzmaschinen sinkt der Leistungsfaktor cosphi mit steigender Polzahl. Dies führt zu hohem Blindstrombedarf der Maschine und deshalb zu größeren Umrichtern. Daher werden bisher in der Regel elektrische Maschinen nach dem Reluktanzprinzip nur mit einer Polzahl von 4 realisiert. Der Rotor ist in der Regel aus Elektroblechen aufgebaut, in welche die Flusssperren gestanzt werden, die die Leitung des Flusses in q-Achse erschweren, wie dies zum Beispiel in US 5 818 140 A beschrieben ist. Reluktanzrotoren dieser Art werden auch als Vagati-Rotor bezeichnet.

Aus der UK 1 114 562 ist ein Rotor für eine Reluktanzmaschine bekannt, der Flussführungspfade zwischen magnetischen Polen des Rotors aufweist. Zur Verbesserung der Flussführung ist der Rotor laminiert ausgestaltet. Anders als bei einem herkömmlichen Rotor mit geblechtem Rotorkörper verlaufen die Laminierungsschichten dabei nicht senkrecht zur Rotationsachse, sondern entlang oder parallel zur Rotationsachse des Rotors. Durch die Laminierung ergibt sich eine magnetische Anisotropie, deren Vorzugsrichtung oder leichte Achse in der Ebene der Laminierungsschichten verläuft.

Aus der JP 4343281 B2 ist ein Reluktanzrotor bekannt, bei dem die Anisotropie entlang der Flussführungspfade nicht durch eine Laminierung des weichmagnetischen Rotorkörpers ausgebildet ist, sondern durch eine mikrokristalline Anisotropie des Eisenkörpers.

Der Erfindung liegt die Aufgabe zugrunde, der Verschlechterung des Leistungsfaktors bei steigender Polpaarzahl eines Reluktanzrotors entgegen zu wirken.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Der erfindungsgemäße Rotor für eine Reluktanzmaschine weist im Querschnitt entlang seines Umfangs in bekannter Weise Polbereiche auf, in welchen Übergangsflächen für den Übergang eines magnetischen Flusses zum Luftspalt der Reluktanzmaschine hin bereitgestellt sind. Die Übergangsflächen bilden also die Eintrittsflächen und Austrittsflächen für den magnetischen Fluss. Innerhalb des Rotors muss der magnetische Kreis der Reluktanzmaschine zwischen den Übergangsflächen geschlossen werden. Hierzu sind jeweils benachbarte Polbereiche über ein Flussleitelement magnetisch gekoppelt.

Um eine möglichst große Anzahl an Polflächen bereitstellen zu können, also eine hochpolige Ausgestaltung des Rotors zu ermöglichen, sind erfindungsgemäß auf einer Welle des Rotors Flussleitelemente jeweils durch einen an der Welle angeordneten Block gebildet, der ein Material aufweist, das eine magnetische Anisotropie mit einer leichten Achse und einer schweren Achse der Magnetisierbarkeit aufweist. Die abwechseln entlang des Umfangs angeordneten Polbereiche und Flussleitelemente bilden also zusammen einen Kranz oder Ring, der um eine Welle beliebigen Umfangs angeordnet werden kann.

Die Anisotropie jedes Blocks ist insbesondere durch eine durch eine magnetokristalline Anisotropie bewirkt. Ein anderer Begriff für die erwähnte leichte Achse der Anisotropie ist auch Vorzugsrichtung der Magnetisierbarkeit. Bei dem erfindungsgemäßen Rotor ist die leichte Achse jedes Blockes zumindest bereichsweise tangential zum Umfang der Hohlwelle oder zumindest in einem Winkel von weniger als 25°, insbesondere weniger als 15°, bezüglich der Tangente des Umfangs im Bereich des jeweiligen Blockes angeordnet. Unter dem Begriff Block ist im Zusammenhang mit der Erfindung insbesondere ein homogener Körper zu verstehen, also ein Körper, in welchem das anisotrope Material gleichmäßig verteilt ist.

Durch die Erfindung ergibt sich der Vorteil, dass der Rotor mit der Welle einen großen Durchmesser aufweisen kann und dennoch das magnetische Drehfeld des Stators entlang des Umfangs der Welle mittels der Flussleitelemente streuungsarm und mit geringer Induktivität geführt werden kann. Die Welle ist bevorzugt eine Hohlwelle.

Bevorzugt weist das Material nur eine einzige leichte Achse auf. Hierdurch ist die Flussführung auch bei einer Bewegung des Rotors in Bezug auf die Richtung stabilisiert, da der magnetische Fluss seine Richtung nicht zwischen mehreren leichten Achsen wechseln kann.

In einer Ausführungsform ist die schwere Achse mit dem kleinsten Wert der relativen Permeabilität senkrecht zur leichten Achse ausgerichtet. Hierdurch ergibt sich der Vorteil, dass eine Induktivität entlang der q-Achse gering ist.

Als besonders geeignet hat es sich erwiesen, wenn eine relative magnetische Permeabilität des Materials entlang der leichten Achse einen Wert größer als 15, insbesondere größer als 20, und entlang der schweren Achse einen Wert kleiner als 5, insbesondere kleiner als 2 aufweist. Hier kann die flussführende Eigenschaft des Flussleitelements einerseits mit der geringen Induktivität entlang der q-Achse besonders gut kombiniert werden. Um die beschriebenen magnetischen Eigenschaften zu erhalten, sind als Parameter bei der Herstellung des Läufers die Legierung, der Temperprozess beim Ausgestalten des Stegs sowie das Magnetfeld, mit welchem die Anisotropie eingeprägt wird, verfügbar. Einfache Versuche ermöglichen hier das Parametrieren des Herstellungsprozesses, um die beschriebenen Werte für die relative magnetische Permeabilität zu erhalten.

Besonders geeignet ist ein Material, welches eine magnetische Sättigung bei einer Flussdichte von mehr als 0,8 Tesla, insbesondere bei mindestens 1,0 Tesla aufweist. Hierdurch ergibt sich der Vorteil, dass der magnetische Fluss effizient zum Antrieb des Rotors genutzt werden kann.

Um sämtliche beschriebenen magnetischen Eigenschaften zu realisieren, sieht eine Ausführungsform der Erfindung vor, dass das Material Neodym-Eisen-Bor, NdFeB, aufweist. Dieses Material ist in Legierungen erhältlich, bei welchen die relative magnetische Permeabilität auf die beschriebenen Werte eingestellt werden kann und durch eine Koerzitivfeldstärke von weniger als zehn Kiloampere pro Meter die beschriebenen flussführenden Eigenschaften im Steg ausgebildet werden können. Das Material ist also kein Permanentmagnet.

In einer Ausführungsform ist auch an den Übergangsflächen der Polbereiche jeweils ein Material angeordnet, das eine magnetische Anisotropie aufweist. Hierbei ist die leichte Achse in radialer Richtung oder zumindest in einem Winkel von weniger als 25°, insbesondere weniger als 15°, zur radialen Richtung ausgerichtet. Hierdurch ergibt sich eine Bündelung des magnetischen Flusses im Luftspalt im Bereich der Pole des Rotors. Es kann vorgesehen sein, dass der Polbereich ein isotropes weichmagnetisches Material aufweist, z.B. Eisen, auf welches eine Schicht mit dem magnetisch anisotropen Material angeordnet ist, welches so die Übergangsfläche bildet. Indem der Polbereich ein isotropes weichmagnetisches Material aufweist, ist eine Flusskrümmung im Rotor zur Überleitung zwischen den Übergangsflächen einerseits und den Flussleitelementen andererseits besonders streuungsarm.

Eine Ausführungsform sieht vor, ein Flussleitelement und jeweils Teile der beiden angrenzenden Polbereiche durch einen einzigen Block oder Körper bereitzustellen. Das Material dieses Blockes weist dann die magnetische Anisotropie auf, wobei die leichte Achse gekrümmt ist. Die Krümmung ist dann insbesondere konkav und führt von einer Übergangsfläche durch das Flussleitelement zur andern Übergangsfläche. Eine gekrümmte leichte Achse kann beispielsweise durch Einprägen der Anisotropie mittels eines externen Magnetfelds erreicht werden, dessen Feldlinien die gewünschte Krümmung aufweisen. Die Ausführungsform weist den Vorteil auf, dass in dem Rotor der magnetische Fluss durchgehend von einer Übergangsfläche zur nächsten mittels des anisotropen Materials geführt ist und hierdurch besonders wenige Streuungen entstehen.

Die Polbereiche können auch durch Speichenelemente gebildet sein, die von den Flussleitelementen verschiedene Körper darstellen. Die Speichenelemente können aus einem isotropen weichmagnetischen Material gebildet sein, in welchem der magnetische Fluss zwischen den Flussleitelementen und den Übergangsflächen geführt wird. Die Speichenelemente können auch ein Material aufweisen, das eine magnetische Anisotropie aufweist und die leichte Achse in radialer Richtung oder zumindest in einem Winkel von weniger als 25°, insbesondere weniger als 15°, zur radialen Richtung ausgerichtet hat. Ist der gesamte Polbereich in Form der Speichenelemente aus dem Material mit der magnetischen Anisotropie gefertigt, ergibt sich der Vorteil, dass der Rotor besonders einfach aus wenigen Teilen gefertigt werden kann.

In einer Ausführungsform ist eine radiale Erstreckung der Polbereiche größer als eine radiale Erstreckung der Flussleitelemente. Hierdurch ergibt sich der Vorteil, dass der Luftspalt L im Bereich der Übergangsflächen in radialer Richtung eine geringere Abmessung aufweist als im Bereich der Flussleitelemente. Dies verringert die Induktivität des Rotors entlang seiner q-Achsen.

Um die Flussleitelemente sicher auf der Hohlwelle zu halten, sieht eine Ausführungsform vor, dass die Flussleitelemente über einen Formschluss von den Polbereichen oder einem nicht-ferromagnetischen Werkstoff der Hohlwelle gegen radiale Fliehkräfte oder Zentrifugalkräfte gehalten sind. Die Polbereiche können beispielsweise durch eine Klebeverbindung oder eine Schraubverbindung oder ebenfalls durch einen Formschluss an der Welle gehalten sein. Dies ermöglicht einen stabileren Aufbau des Rotors im Vergleich zu einem Reluktanzläufer mit Elektroblechen mit Flusssperren.

Um in vorteilhafter Weise die Flussführung zwischen den Übergangsflächen und den Flussleitelementen zu unterstützen, ist bei einer Ausführungsform vorgesehen, dass in den Polbereichen Aussparungen vorgesehen sind, die Flusssperren zum Umleiten des magnetischen Flusses zwischen der Übergangsfläche und den beiden angrenzenden Flussleitelementen bilden. Die Aussparungen können beispielsweise zur Kühlung hohl, d.h. luftgefüllt, sein oder zur mechanischen Stabilisierung mit einem nicht-ferromagnetischen Material, beispielsweise Aluminium oder einer Keramik, gefüllt sein.

Der erfindungsgemäße Rotor weist bevorzugt eine Anzahl der Polbereiche auf, die größer 4, insbesondere größer als 6, insbesondere größer als 8, ist. Mit anderen Worten ist der Rotor bevorzugt hochpolig ausgestaltet.

Wie bereits ausgeführt, gehört zu der Erfindung auch eine elektrische Maschine mit einem Stator mit elektrischen Spulen, d.h. Magnetspulen, und mit einem Rotor, wobei erfindungsgemäß der Rotor eine Ausführungsform des erfindungsgemäßen Rotors ist.

Zu der Erfindung gehört auch ein Verfahren zum Herstellen des Rotors gemäß der Erfindung. Das Verfahren umfasst die Schritte Bereitstellens einer Welle, des Ausbildens von jeweiligen Polbereichen entlang eines Umfangs der Welle und des Anordnens von Flussleitelementen zwischen jeweils zwei Polbereichen. Erfindungsgemäß wird als Flussleitelement jeweils an der Welle ein Block aus einem Material mit einer magnetischen Anisotropie mit einer leichten Achse und einer schweren Achse der Magnetisierbarkeit angeordnet. Die leichte Achse wird zumindest bereichsweise tangential zum Umfang der Welle oder zumindest in einem Winkel von weniger als 25°, insbesondere weniger als 15°, bezüglich der Tangente des Umfangs ausgerichtet.

In einer Ausführungsform wird jeder Block durch Pressen eines Pulvers und/oder Granulats ausgebildet. Das Pulver und/oder Granulat weist jeweils das Material auf. Während des Pressens wird gleichzeitig das Pulver und/oder Granulat mit einem Magnetfeld beaufschlagt. Hierdurch wird während des Pressens die Anisotropie in dem Material erzeugt oder eingeprägt. Diese Ausführungsform weist den Vorteil auf, dass jeder Block eine frei mittels einer entsprechenden Pressform vorgebbare Gestalt aufweisen kann.

Im Folgenden sind Ausführungsbeispiele der Erfindung beschrieben. Hierzu zeigt:
- FIG 1: eine schematische Darstellung eines Längsschnitts durch eine Ausführungsform der erfindungsgemäßen Maschine,
- FIG 2: eine schematische Darstellung eines Querschnitts durch einen erfindungsgemäßen Rotor der elektrischen Maschine von FIG 1,
- FIG 3: eine schematische Darstellung eines Querschnitts durch einen weiteren erfindungsgemäßen Rotor mit Speichenelementen aus magnetisch anisotropem Material,
- FIG 4: eine schematische Darstellung eines Querschnitts durch einen weiteren erfindungsgemäßen Rotor mit gekrümmter leichter Achse,
- FIG 5: eine schematische Darstellung eines Querschnitts durch einen weiteren erfindungsgemäßen Rotor mit ringförmigem Trägerteil und
- FIG 6: eine schematische Darstellung eines Querschnitts durch einen weiteren erfindungsgemäßen Rotor mit Aussparungen zur Flussführung.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Der besseren Übersichtlichkeit halber sind in den Figuren funktionsgleiche Elemente mit jeweils denselben Bezugszeichen versehen.

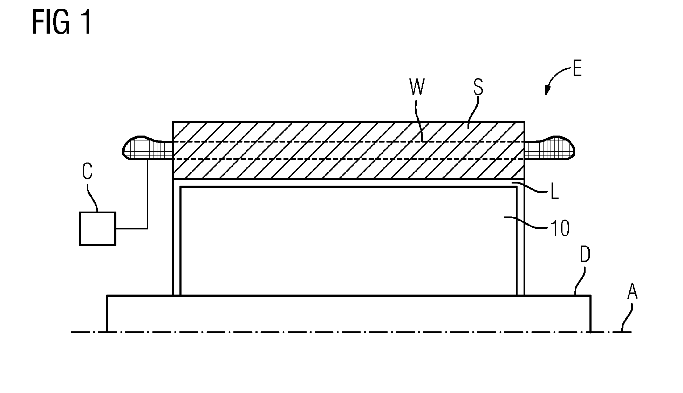

In FIG 1 ist eine elektrische Maschine E im Längsschnitt gezeigt, bei der es sich um eine Reluktanzmaschine handeln kann. In FIG 1 stellt eine Rotationsachse A auch eine Symmetrieachse der Darstellung dar. Die elektrische Maschine E umfasst einen Stator S, in welchem Wicklungen elektrischer Spulen W angeordnet sind, wobei in FIG 1 nur eine der Spulen W dargestellt ist. Die Spulen W können durch ein Drehstromquelle C abwechselnd bestromt werden, wodurch im Inneren des Stators S ein magnetisches Drehfeld in einem Luftspalt L der elektrischen Maschine E entsteht. Die Drehstromquelle C kann beispielsweise ein Wechselrichter oder ein festfrequentes elektrisches Versorgungsnetz sein

Im Inneren des Stators S kann sich ein Rotor 10 befinden, der drehfest mit einer Welle D verbunden sein kann. Die Welle D ist um die Rotationsachse A drehbar in dem Stator S gelagert. Die Welle D kann als Hohlwelle ausgestaltet sein. Der Rotor 10 kann eine Ausführungsform des erfindungsgemäßen Rotors sein.

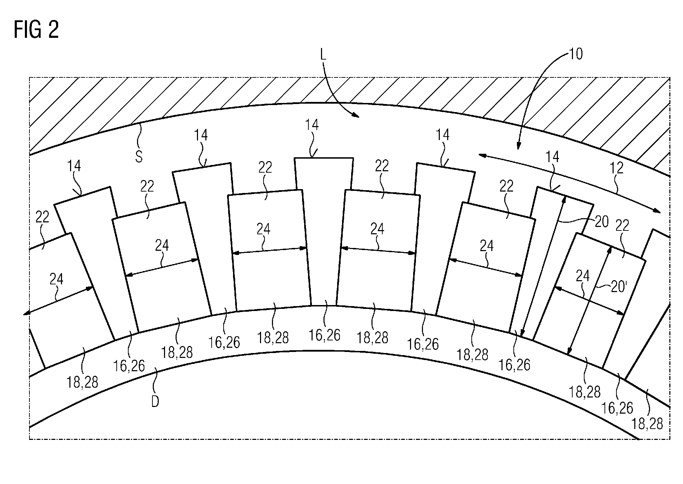

FIG 2 zeigt einen Ausschnitt aus einem Querschnitt des Rotors 10. Entlang einer Umfangsrichtung 12 der Welle D können Übergangsflächen 14 für einen vom Stator S im Luftspalt L erzeugten magnetischen Fluss eines magnetischen Drehfelds vorgesehen sein. Durch die Übergangsflächen 14 kann der magnetische Fluss zwischen dem Luftspalt L und Polbereichen 16 des Rotors 10 eintreten oder austreten. Zwischen jeweils in Umfangsrichtung 12 benachbart angeordneten Polbereichen 16 können Flussleitelemente 18 angeordnet sein, um einen magnetischen Kreis zwischen zwei Übergangsflächen 14 zu schließen. Jede Übergangsfläche 14 kann im Betrieb der elektrischen Maschine E jeweils einen Pol darstellen.

Der Rotor 10 kann mehr als vier Übergangsflächen 14 und damit mehr als vier Pole, insbesondere mehr als sechs, insbesondere mehr als acht Pole aufweisen. Ein Durchmesser der Hohlwelle D kann beispielsweise größer als 30 Zentimeter, insbesondere größer als 70 Zentimeter sein.

Die Polbereiche 16 können aus weichmagnetischem isotropem Werkstoff gefertigt sein und beispielsweise als im Querschnitt keilförmige oder speichenförmige, sich in ihrer Längserstreckung entlang der Rotationsachse A erstreckende Stege ausgestaltet sein. Jeder Polbereich 16 wird dann durch ein solches Speichenelement 26 gebildet.

Eine radiale Erstreckung 20 der Polbereiche 16 und eine radiale Erstreckung 20' der Flusselemente 18 kann beispielsweise weniger als 20 Prozent, insbesondere weniger als zehn Prozent, eines Durchmessers der Hohlwelle D betragen. Die Anordnung aus Polbereichen 16 und Flussleitelementen 18 ist dann in radialer Richtung besonders flach.

Dabei ist eine radiale Erstreckung 20 der Polbereiche 16 bevorzugt größer als eine radiale Erstreckung 20' der Flussleitelemente 18. Hierdurch ergibt sich der Vorteil, dass der Luftspalt L im Bereich der Übergangsflächen 14 in radialer Richtung eine geringere Abmessung aufweist, als im Bereich der Flussleitelemente 18. Dies verringert die Induktivität des Rotors 10 entlang der q-Achse.

Bei der elektrischen Maschine E führt dies dennoch nicht dazu, dass der magnetische Fluss aus den Flusselementen 18 ausstreut und einen Streufluss beispielsweise in der Welle D oder zwischen den Übergangsflächen 14 verursacht.

Die Flussleitelemente 18 können hierzu jeweils aus einem Körper oder Steg oder Block 28 aus einem anisotropen weichmagnetischen Werkstoff oder Material 22 gefertigt sein. Das Material 22 kann insbesondere in der beschriebenen Weise NeFeB aufweisen, das in einer Legierung vorliegt, die nicht-permanentmagnetisch, also weichmagnetisch ist.

Um hierbei eine geringe Induktivität zwischen den Übergangsflächen 14 zu erhalten, sind die jeweiligen leichten Achsen 24 des anisotropen Materials 22 der Flussleitelemente 18 bevorzugt parallel zur Umfangsrichtung 12 im Bereich des jeweiligen Flussleitelements 18 ausgerichtet. Die leichten Achsen 24 können auch in einem Winkel von weniger als 25°, insbesondere weniger als 15°, bezüglich der Tangente zum Umfang der Welle ausgerichtet sein.

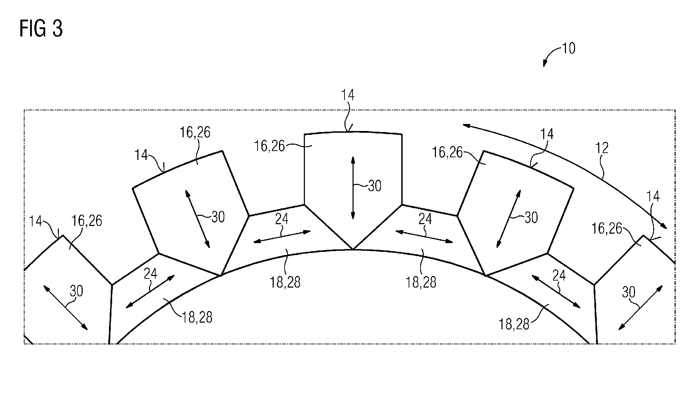

Eine weitere Variante für den erfindungsgemäßen Rotor 10 ist in FIG 3 dargestellt. Gemäß FIG 3 besteht der rotorseitige magnetische Kreis nur aus einem anisotropen weichmagnetischen Werkstoff. Hierzu sind sowohl die Flussleitelemente 18 als auch die Speichenelemente 26 der Polbereiche 16 als auch die Blöcke 28 der Flussleitelemente 18 aus einem Material mit einer magnetischen Anisotropie gebildet. Die leichten Achsen 24 der Blöcke 26 sind dabei idealerweise parallel zur Umfangsrichtung 12, d.h. tangential zum Umfang, angeordnet. Die Speichenelemente 24 weisen ein Material auf, dessen leichte Achse 30 in radialer Richtung bezüglich der Rotationsachse A ausgerichtet ist. Bezüglich der jeweiligen radialen Richtung können die leichten Achsen 30 auch in einem Winkel von weniger als 25°, insbesondere weniger als 15°, ausgerichtet sein.

Die anisotropen weichmagnetischen Materialien mit den unterschiedlichen Ausrichtungen der leichten Achsen 24, 30 (radial für die Speichenelemente 26 und tangential für die Blöcke 28) können so miteinander kombiniert sein, dass die leichte magnetische Achse weitgehend in die gewünschte Richtung des magnetischen Flusses zeigt. Hierzu können die Blöcke 28 und die Speichenelemente 26 geschrägte Flächen aufweisen. Mit anderen Worten können die Blöcke 28 einen trapezförmigen Querschnitt aufweisen. Die Speichenelemente 26 können keilförmig ausgestaltet sein.

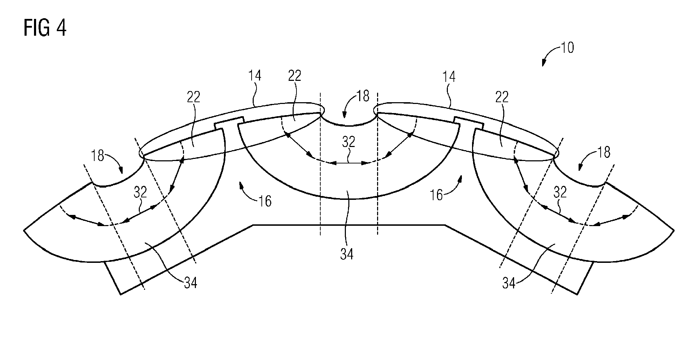

Die Ausführung gemäß FIG 4 ähnelt der Ausführungsform gemäß FIG 3. Sie weist anstatt einer diskreten Änderung der leichten magnetischen Achse eines anisotropen weichmagnetischen Werkstoffs 22 eine kontinuierliche Änderung der leichtmagnetischen Achse, das heißt eine gekrümmte leichtmagnetische Achse 32 auf. Die gekrümmte Achse 32 kann in ihrem Verlauf dem gewünschten magnetischen Fluss entsprechen. Dieser nichtgeradlinige Verlauf kann beispielsweise durch folgende zwei Methoden erzeugt werden.

Zum einen kann aus einer Folie aus dem Material 32 ein gekrümmter Körper gewickelt werden, dessen Form den gekrümmten Verlauf nachbildet. In einem weiteren Prozessschritt kann das Material entsprechend den gewünschten Abmessungen aus dem gewickelten Körper herausgetrennt werden.

Zum anderen kann die Erzeugung der Anisotropie erst durch eine Magnetisierung des Materials 22 in eingebautem Zustand erfolgen. Das hierfür notwendige elektromagnetische Feld kann durch den Ständer der elektrischen Maschine E oder eine separate, dedizierte Apparatur erzeugt werden.

Um den gekrümmten Verlauf der gekrümmte Achse 32 nutzen zu können, sind das Flussleitelement 18 und jeweils ein Teil der angrenzenden Polbereiche 16 zusammen durch einen Materialblock 34 gebildet, der sowohl jeweils ein Flussleitelement 18 darstellt als auch einen jeweiligen Teil des Polbereichs 16, also für jeden Polbereich 16 einen Teil der Übergangsfläche 14 darstellt oder bereitstellt.

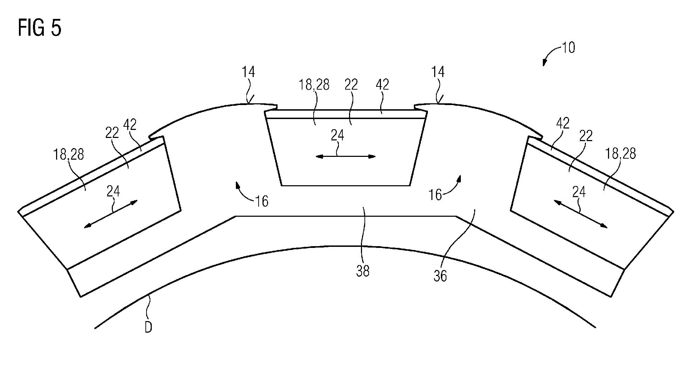

In einer weiteren Variante, die in FIG 5 dargestellt ist, kann der Block 28 jedes Flussleitelements 18 durch einen nicht-ferromagnetischen Werkstoff 36, der beispielsweise unmagnetisches Hartgewebe, das auf der Grundlage von Phenolharz gebildet sein kann, oder z.B. Edelstahl umfassen kann, an der Welle D beispielsweise durch einen Formschluss fixiert sein. Die Speichenelemente 16 können dazu Teil der Voll- oder Hohlwelle sein oder mit dieser über Form- oder Kraftschluss verbunden sein, beispielsweise durch Klebe- oder Schraubverbindung. Dies ermöglicht einen stabileren Aufbau des Rotors im Vergleich zu einem Reluktanzläufer mit Elektroblechen mit Flusssperren.

Der Werkstoff 36 kann beispielsweise durch die Welle D selbst bereitgestellt sein oder auf der Welle D als Ring 38 angeordnet sein.

Ein Flussleitelement 18 kann bei dem Erfindungsgemäßen Rotor 10 durch ein Abdeckelement, z.B. eine Platte 42, radial nach außen hin abgegrenzt sein. Das Abdeckelement kann das Flussleitelement 18 gegen Fliehkräfte stützen.

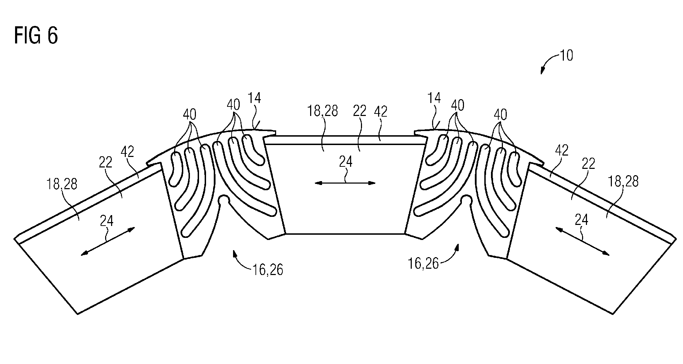

In FIG 6 ist veranschaulicht, wie isotrope Weicheisenteile als Speichenelemente 26 in dem Rotor 10 bereitgestellt sein können und die Speichenelemente 26 Aussparungen 40 aufweisen können, die die Leitung des magnetischen Flusses entlang der d-Achse verbessern und/oder eine kühlende Wirkung haben. In FIG 6 sind der Übersichtlichkeit halber nur einige der Aussparungen 40 mit einem Bezugszeichen versehen.

Die Reluktanzmotoren mit den gezeigten Anordnungen der Rotoren weisen folgende Vorteile auf:

Es ergibt sich eine große d-Achseninduktivität aufgrund kleinerer realisierbarer Luftspalte zum Ständer im Bereich der weichmagnetischen isotropen Aktivteile, also an den Übergangsflächen 14. Eine weitere Erhöhung der d-Achseninduktivität ist durch kurze Wege des magnetischen Flusses im Läufer durch Einsatz des anisotropen weichmagnetischen Materials anstelle von Luft möglich, die sonst als Flusssperre benötigt werden würde. Des Weiteren ergibt sich eine kleine q-Achseninduktivität aufgrund größerer Luftspalte zum Ständer im Bereich der Flussleitelemente. Die Flussleitelemente führen den Fluss in der q-Achse schlecht, wodurch im Vergleich zu Luft anstatt der Flussleitelemente die q-Achseninduktivität in ihrer Größe ähnlich bleibt.

Insgesamt wird ein größerer Unterschied der Induktivitäten entlang der d-Achse einerseits und der q-Achse andererseits geschaffen als dies bei einem Läufer ohne magnetisch anisotropes Material der Fall wäre. Die Drehmomentbildung einer Reluktanzmaschine wird durch eine möglichst große Differenz der Induktivitäten in der q- und d-Achse bestimmt. Das heißt die gezeigte Anordnung mit dem anisotropen weichmagnetischen Material generiert mehr Drehmoment als eine Anordnung ohne diese Teile mit dem anisotropen Material.

Durch die größere d-Achseninduktivität weist die elektrische Maschine E entsprechend einen größeren Leistungsfaktor auf. Im Vergleich zu einem Reluktanzläufer ohne das anisotrope Material können durch kleinere Aktivteile oder durch eine stabilere Ausführung des Rotors größere Wellendurchmesser beziehungsweise Hohlwellen mit größerem Innenradius realisiert werden. Die mechanische Festigkeit des Rotors kann im Vergleich zu einer Anordnung mit Flusssperren erhöht werden, zum Beispiel durch Fügen der Aktivteile, also der Flussleitelemente und der Polbereiche mittels Form- oder Kraftschluss.

Insgesamt zeigt das Beispiel, wie durch die Erfindung in hochpoliger Reluktanzläufer mit anisotropen, weichmagnetischen Werkstoffen bereitgestellt werden kann.

## Patentansprüche

1. Rotor (10) für eine Reluktanzmaschine (E), mit entlang eines Umfangs (12) angeordneten Polbereichen (16) mit einer Übergangsfläche (14) für einen magnetischen Fluss zu einem Luftspalt (L) der Reluktanzmaschine (E) hin, wobei jeweils benachbarte Polbereiche (16) über ein Flussleitelement (18) magnetisch gekoppelt sind, **dadurch gekenn-zeichnet**, dass der Rotor (10) eine Welle (D) aufweist und die Flussleitelemente (18) jeweils durch einen an der Welle (D) angeordneten Block (28,34) gebildet sind, wobei ein Material (22) des Blockes (28,34) eine magnetische Anisotropie mit einer leichten Achse (24) und einer schweren Achse der Magnetisierbarkeit aufweist und die leichte Achse (24) zumindest bereichsweise tangential zum Umfang (12) oder zumindest in einem Winkel von weniger als 25° bezüglich der Tangente des Umfangs (12) angeordnet ist.

2. Rotor (10) nach Anspruch 1, wobei die Welle (D) eine Hohlwelle ist.

3. Rotor (10) nach einem der vorhergehenden Ansprüche, wobei die schwere Achse senkrecht zur leichten Achse ausgerichtet ist und/oder das Material (22) nur eine einzige leichte Achse aufweist.

4. Rotor (10) nach einem der vorhergehenden Ansprüche, wobei eine relative magnetische Permeabilität des Materials (22) entlang der leichten Achse einen Wert größer als 15, insbesondere größer als 20, und entlang der schweren Achse einen Wert kleiner als 5, insbesondere kleiner als 2, aufweist.

5. Rotor (10) nach einem der vorhergehenden Ansprüche, wobei eine magnetische Sättigung des Materials (22) bei einer Flussdichte von mehr als 0,8 Tesla, insbesondere bei mindestens 1,0 Tesla, liegt.

6. Rotor (10) nach einem der vorhergehenden Ansprüche, wobei das Material (22) Neodym-Eisen-Bor, NdFeB, aufweist.

7. Rotor (10) nach einem der vorhergehenden Ansprüche, wobei an den Übergangsflächen (14) jeweils ein Material (22) angeordnet ist, das eine magnetische Anisotropie aufweist, und die leichte Achse (30,32) in radialer Richtung oder zumindest in einem Winkel von weniger als 25° zur radialen Richtung ausgerichtet ist.

8. Rotor (10) nach einem der vorhergehenden Ansprüche, wobei durch jeden Block (34) jeweils ein Flussleitelement (18) und jeweils ein Teil der beiden angrenzenden Polbereiche (16) gebildet ist und das Material (22) des Blockes (34) eine gekrümmte leichte Achse (32) aufweist.

9. Rotor (10) nach einem der Ansprüche 1 bis 7, wobei die Polebereiche (16) durch Speichenelemente (26) gebildet sind, die ein Material aufweisen, das eine magnetische Anisotropie aufweist, und die leichte Achse (30) in radialer Richtung oder zumindest in einem Winkel von weniger als 25° zur radialen Richtung ausgerichtet ist.

10. Rotor (10) nach einem der vorhergehenden Ansprüche, wobei in den Polbereichen (16) Aussparungen (40) vorgesehen sind, die Flusssperren zum Umleiten des magnetischen Flusses zwischen den Übergangsflächen (14) und den beiden jeweils angrenzenden Flussleitelementen (18) bilden.

11. Rotor (10) nach einem der vorhergehenden Ansprüche, wobei eine radiale Erstreckung (20) der Polbereiche größer als eine radiale Erstreckung (20') der Flussleitelemente ist.

12. Rotor (10) nach einem der vorhergehenden Ansprüche, wobei eine Anzahl der Polbereiche (16) größer als 4 oder größer als 6 oder größer als 8 ist.

13. Elektrische Reluktanzmaschine (E) mit einem Stator (S) mit elektrischen Spulen (W) und mit einem Rotor (10), **dadurch gekennzeichnet, dass** der Rotor (10) nach einem der vorhergehenden Ansprüche ausgestaltet ist.

14. Verfahren zum Herstellen eines Rotors (10) nach einem der Ansprüche 1 bis 12, mit dem Schritt:
- Bereitstellen einer Welle (D),
- Ausbilden von jeweiligen Polbereichen (16) entlang eines Umfangs (12) der Welle (D),
- Anordnen von Flussleitelementen (18) zwischen jeweils zwei Polbereichen (16),
**gekennzeichnet durch** den Schritt:
- als Flussleitelemente (18) jeweils an der Welle (D) ein Block (28,34) aus einem Material (22) mit einer magnetischen Anisotropie mit einer leichten Achse (24) und einer schweren Achse der Magnetisierbarkeit angeordnet wird und die leichte Achse (24) zumindest bereichsweise tangential zum Umfang (12) oder zumindest in einem Winkel von weniger als 25° bezüglich der Tangente des Umfangs (12) ausgerichtet wird.

15. Verfahren nach Anspruch 14, wobei jeder Block (28,34) durch Pressen eines Pulvers und/oder Granulats, welches jeweils das Material (22) enthält, und gleichzeitiges Beaufschlagen mit einem Magnetfeld ausgebildet wird.
